(19) Europäisches Patentamt / European Patent Office / Office européen des brevets

(11) **EP 4 501 880 A1**

(12) **EUROPEAN PATENT APPLICATION**
published in accordance with Art. 153(4) EPC

(43) Date of publication:
**05.02.2025 Bulletin 2025/06**

(21) Application number: 23775009.6

(22) Date of filing: **23.03.2023**

(51) International Patent Classification (IPC):
*C04B 7/14* (2006.01)    *C04B 14/28* (2006.01)
*C04B 22/14* (2006.01)    *C04B 28/04* (2006.01)
*C04B 18/14* (2006.01)

(52) Cooperative Patent Classification (CPC):
**C04B 7/14; C04B 14/28; C04B 18/14; C04B 22/14;
C04B 28/04**

(86) International application number:
**PCT/JP2023/011452**

(87) International publication number:
**WO 2023/182415 (28.09.2023 Gazette 2023/39)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **25.03.2022 JP 2022049312**

(71) Applicant: **TOKUYAMA CORPORATION
Yamaguchi 745-8648 (JP)**

(72) Inventors:
• **MORI, Akiyoshi**
  **Shunan-shi, Yamaguchi 745-8648 (JP)**
• **CHABAYASHI, Takashi**
  **Shunan-shi, Yamaguchi 745-0053 (JP)**

(74) Representative: **Kuhnen & Wacker
Patent- und Rechtsanwaltsbüro PartG mbB
Prinz-Ludwig-Straße 40A
85354 Freising (DE)**

(54) **HYDRAULIC COMPOSITION AND PRODUCTION METHOD THEREOF**

(57) A hydraulic composition that is baked at a relatively low temperature and has good long-term compressive strength development is provided. The hydraulic composition comprises: a cement clinker having the total content of $C_3A$ and $C_4AF$ of 24 mass% or more, a $C_3S$ content of 63 mass% or more, and an iron modulus (I.M.) not less than 1.14 and not more than 1.27; calculated by the Bogue's formulae; gypsum; blast furnace slag; and limestone. The hydraulic composition has the total content of blast furnace slag and limestone more than 5 mass% and not more than 14 mass%.

EP 4 501 880 A1

**Description**

Field of the Invention

The present invention relates to a hydraulic composition containing cement clinker, gypsum, blast furnace slag, and limestone. The total content of gypsum, blast furnace slag, and limestone is more than 5 mass%, and the total content of blast furnace slag and limestone is 14 mass% or less. The contents indicate those per total hydraulic composition. More particularly, the present invention relates to a hydraulic composition that exhibits good long-term strength development and contains cement clinker baked at a relatively low temperature. The present invention also relates to a method for producing the hydraulic composition.

Background Art

The cement industry is a mass-production, mass-consumption industry. Resource saving and energy saving have been and will be the most important issue. For example, to produce Portland cement, the most mass-produced cement, raw materials prepared to a specified chemical composition must be baked at a high temperature of 1450-1550 degree Celsius. The energy cost to obtain this temperature is enormous.
Effective utilization of wastes and by-products is an important issue about recent global environmental problems. The cement industry and cement manufacturing facilities have unique, characters suitable for the effective use or treatment of waste as raw materials or fuel during cement production for the safe and large-volume disposal of wastes.
Among wastes and by-products, municipal solid waste incineration ash, granulated blast furnace slag, blast furnace slow-cooled slag, etc., especially coal ash, have higher $Al_2O_3$ content than the normal cement clinker composition. Their usage increases $3CaO \cdot Al_2O_3$ (hereafter $C_3A$) content.
$C_3A$ and $4CaO \cdot Al_2O_3 \cdot Fe_2O_3$ (hereafter $C_4AF$) are called an interstitial phase, and $C_3A$ and $C_4AF$ lower the clinker baking temperature. On the other hand, they affects the content of other minerals that make up clinker ($3CaO \cdot SiO_2$ ($C_3S$) and $2CaO \cdot SiO_2$ ($C_2S$)), which are important for the strength of cement and affect cement properties.
The present inventors have proposed a cement clinker with a high content of the interstitial phase to enable low-temperature baking and good physical properties such as strength (Patent Document 1). In this cement clinker, the total content of $C_3A$ and $C_4AF$ is 22 mass% or more, $C_3S$ is 60 mass% or more, and the iron modulus (I.M.) is 1.3 or less.
When low I.M. clinker is used, it has been known that using a specific mixture (blast furnace slag and limestone) of 5 mass% or less can promote the initial strength development properties (Patent Document 2). By the way, in the case of conventional ordinary Portland cement, the use of a mixture of materials (limestone fine powder, blast furnace slag fine powder, and fly ash) with more than 5 mass% and not more than 10 mass% has not been confirmed to promote long-term strength development in a single mixture (Non-Patent Document 1).
However, it has been reported that when limestone fine powder and fly ash are used together, the promotion of long-term strength development can be achieved (Non-Patent Document 2).
However, according to the inventor's study, when a single small content of mixed component or a mixture of limestone powder and fly ash, as described in the non-patent literature, is applied to low-I.M. clinker, the long-term strength development is not sufficient.

Prior Art Documents

Patent Documents

Patent Document 1: JP 2012-224504A
Patent Document 2: JP 2014-097918A

Non-Patent Documents

Non-Patent Document 1: Nakaguchi et al., "Quality Evaluation of Cement with Increased Small content of Mixing Components," Abstracts of the 72nd Cement Technology Conference, 2018, p. 270-271.
Non-Patent Document 2: Kadota et al., "Influence of C3S of base cement on compressive strength of cement with increased small content of mixed component up to 10 mass%," Abstracts of the 74th Cement Technology Conference, 2020, p. p. 186-187

Summary of the Invention

Problem to be Solved by the Invention

The use of low-I.M. clinker increases the content of waste material used compared to conventional cement and requires the reduced baking temperature when manufactured. However, there is a need for a hydraulic composition that exhibits better long-term strength development.

Means for Solving the Problem

The inventors have completed the present invention after conducting a diligent study to solve the problem. The inventors have completed the present invention by adding limestone and blast furnace slag to the low-I.M. clinker as a mixture in specific proportions and has found that better strength development properties is obtained than the clinker without mixture and the clinker with a single mixture.

The hydraulic composition according to the invention comprises: a cement clinker having the total content of $C_3A$ and $C_4AF$ of 24 mass% or more, a $C_3S$ content of 63 mass% or more, and an iron modulus (I.M.) not less than 1.14 and not more than 1.27; calculated by the Bogue's formulae; gypsum; blast furnace slag; and limestone, and is characterized in that the total content of blast furnace slag and limestone is more than 5 mass% and not more than 14 mass% in the hydraulic composition.

The production method of the hydraulic composition according to the invention comprises: producing a cement clinker by baking a mixture of a CaO source; an $SiO_2$ source; an $Al_2O_3$ source; and a $Fe_2O_3$ source at a temperature not less than 1300 degree Celsius and not more than 1400 degree Celsius such that the resultant cement clinker has the total content of $C_3A$ and $C_4AF$ of 24 mass% or more; a $C_3S$ content of 63 mass% or more; and an iron modulus (I.M.) not less than 1.14 and not more than 1.27, calculated by the Bogue's formulae, and

adding gypsum; blast furnace slag; and limestone to the cement clinker after cooling such that the total content of blast furnace slag and limestone is more than 5 mass% and not more than 14 mass% in the total composition. The descriptions regarding the hudraulic composition in the specification apply to its production method as they are.

Preferably, the cement clinker consists of: $C_3A$; $C_4AF$; $C_3S$; and $C_2S$ and

has a composition of: calculated by the Bogue's formulae,
the total content of $C_3A$ and $C_4AF$ not less than 24 mass% and not more than 32 mass%; the content of $C_4AF$ not less than 15 mass%;
the $C_3S$ content not less than 63 mass% and not more than 65 mass%; and
a $C_2S$ content is not less than 3 mass% and not more than 13 mass%.

Advantageous Effects of the Invention

According to the present invention, a hydraulic composition is provided. The hydraulic composition uses more wasted materials than conventional cement clinker for the production, has a reduced the baking temperature about from 1300 to 1400 degree Celsius, and has very good long-term strength development properties.

Means for Carrying out the Invention

The contents of $C_3A$, $C_4AF$ and $C_3S$, in the present invention, are determined by the Bogue's formulae.

The Bogue's formulae have been used along with indices and moduli, and are formulae for calculating the approximate contents of major minerals from the major chemical composition, and have been well known to those skilled in the art. For the sake of clarity, here is how the

Bogue'sg formulae are used to determine the content of minerals in clinker.

$$C_3S \text{ content} = (4.07 \times CaO) - (7.60 \times SiO_2) - (6.72 \times Al_2O_3) - (1.43 \times Fe_2O_3)$$

$$C_2S \text{ content} = (2.87 \times SiO_2) - (0.754 \times C_3S)$$

$$C_3A \text{ content} = (2.65 \times Al_2O_3) - (1.69 \times Fe_2O_3)$$

$$C_4AF \text{ content} = 3.04 \times Fe_2O_3$$

The iron content (I.M.), along with hydraulic modulus (H.M.), silicon modulus (S.M.), activity index (A.I.), and lime saturation degree (L.S.D.), are obtained from major chemical composition and have been used as characteristic values for clinker production control along with other auxiliary indices and moduli and have been well known to those skilled in the art. For the sake of clarity, the calculation for the iron modulus is described below, along with the calculations for the other indices.

$$\text{Hydraulic Modulus} \qquad (H.M.) = \quad CaO / (SiO_2 + Al_2O_3 + Fe_2O_3)$$

$$\text{Silicon Modulus} \qquad (S.M.) = \quad SiO_2 / (Al_2O_3 + Fe_2O_3)$$

$$\text{Activity Index} \qquad (A.I.) = \quad SiO_2 / Al_2O_3$$

$$\text{Iron Modulus} \qquad (I.M.) = \quad Al_2O_3/Fe_2O_3$$

$$\text{Lime Saturation Degree} \qquad (L.S.D.) = \quad CaO / (2.8 \times SiO_2 + 1.18 \times Al_2O_3 + 0.65 \times Fe_2O_3)$$

"CaO", "$SiO_2$", "$Al_2O_3$" and "$Fe_2O_3$" in the equations are measured according to JISR 5202 "Chemical Analysis Method for Portland Cement" and JISR 5204 "X-ray Fluorescence Analysis Method for Cement", respectively. When a range is specified in this specification, such as A to B, the upper and lower limits are included. "%" represents mass % unless otherwise specified.

As mentioned above, in cement clinker used in the present invention, the content of $C_3A$ and $C_4AF$ in total has to be at least 24 mass%. When the content is less than 24 mass%, it becomes difficult to obtain cement clinker with good physical properties such as strength development by baking at a temperature of 1300-1400°C. In addition, as described below, at least 63 mass% of $C_3S$ is required to obtain high-strength development properties. Therefore, the total content of $C_3A$ and $C_4AF$ is limited to 37 mass% or less. Preferably, it is 35 mass% or less, more preferably 32 mass% or less, and especially 28 mass% or less. Of these two components, $C_4AF$ is preferably present at 15 mass% or more by itself, for baking at a relatively low temperature and for reducing f-CaO content (free-CaO content) in the clinker.

The content of $C_3S$ is very important for the strength development of the cement composition (hereinafter simply "cement") of the present invention. If this content is less than 63 mass%, good strength development cannot be obtained even if the total content of $C_3A$ and $C_4AF$ and the iron modulus described below are within the specified range. Since the total content of $C_3A$ and $C_4AF$ is at least 24 mass%, the upper limit of the $C_3S$ content is 76 mass%. To secure some period from the start to the end of setting, 70 mass% or less is preferable, and 65 mass% or less is more preferable.

The cement clinker used in the present invention may further contain $C_2S$. The content is 13 mass% or lower, and preferably, 10 mass% or lower and the content is preferably 3 mass% or more. From the viewpoint of obtaining long-term strength, the total content of $C_3S$ and $C_2S$ is preferred to be 69 mass% or more.

Regarding the cement clinker used in the present invention, it is important to have an iron modulus (I.M.) of 1.14 to 1.27. If the iron modulus exceeds 1.3, sufficient strength development (more specifically, for example, mortar strength development) in the cement clinker used in the present invention cannot be obtained, even if other requirements are satisfied. Furthermore, if the iron modulus exceeds 1.3, the period from the start of the setting to its termination tends to be too long. In the present invention, the iron modulus is 1.3 or lower and is 1.14 to 1.27.

The hydraulic modulus and silica modulus are not particularly limited. Still, to make cement clinker with an excellent balance of various properties, the hydraulic modulus is preferably 1.8 to 2.2, especially 1.9 to 2.1. The silica modulus is preferably 1.0 to 2.0, especially 1.1 to 1.7.

The method of producing the cement clinker used in the present invention is not particularly limited and the clinker according to the invention is easily obtained by preparing and mixing known cement (clinker) raw materials in predetermined proportions to achieve the mineral indices and moduli and baking them by known methods (such as SP kilns and NSP kilns).

For the preparation and mixing method of cement raw materials, any known method can be adopted. For example, the composition of wastes, by-products, and other raw materials (CaO sources such as limestone, quicklime, and slaked lime, SiOz sources such as silica stone, $Al_2O_3$ sources such as clay, and $Fe_2O_3$ sources such as steel slag) can be measured in advance, and the mixing ratio of the raw materials is calculated from the component ratio in these materials. The raw materials are then blended according to the above ratio.

The raw materials used in the manufacture of cement clinker in the present invention may be any raw materials having been used in the manufacture of cement clinker. Waste materials, by-products, etc. are of course usable.

The use of one or more types of wastes, by-products, etc. in the manufacture of cement clinker used in the present invention is desirable from the viewpoint of promoting the effective use of wastes, by-products, etc. More specific examples of preferable wastes and by-products include blast furnace slag, steelmaking slag, nonferrous slag, coal ash, sewage sludge, water purification sludge, paper sludge, construction soil, foundry sand, dust, incineration fly ash, molten fly ash, chlorine bypass dust, wood chips, waste white soil, bota, waste tires, shells, municipal waste and its incinerated ash, etc. (In addition, some of these can be used as raw materials for cement as well as a source of heat energy.)

In particular, the cement clinker used in the present invention contains a large content of $C_3A$ and $C_4AF$ containing aluminum as the constituent element. Therefore, it has the advantage over conventional cement clinker that it is produced from more waste and by-products with a high aluminum content.

In addition to the cement clinker, the hydraulic composition of the present invention contains gypsum, limestone, and blast furnace slag.

As for the gypsum to be used, any known cement manufacturing raw material such as dihydrate gypsum, hemihydrate gypsum, anhydrate gypsum, etc. can be used without any particular restrictions. The content of gypsum is preferably determined such that the $SO_3$ content in the hydraulic composition is 1.5 to 5.0 mass% and more preferably 1.8 to 3 mass%.

According to the hydraulic composition of the invention, any limestone known as a cement mixing material can be used. For example, natural limestone or synthetic calcium carbonate can be used. The inclusion of limestone in the composition results in better strength development compared to one without limestone. This is surprising since the strength of clinker having a total content of $C_3A$ and $C_4AF$ of 18 to 20 mass%, having been widely used, tends to decrease with the addition of limestone.

In order to better express the effect of the invention, limestone content of 5 mass% or more is preferred.

The composition according to the present invention further contains blast furnace slag known as a cement mixing material. When including both blast furnace slag and limestone, better long-term strength development is obtained compared to those including only blast furnace slag or limestone, in particular, when the content of blast furnace slag and limesone is equivalent.

The total content of limestone and blast furnace slag is more than 5 mass% and not more than 14 mass%, preferably not less than 8 mass% and not more than 12 mass% in the total composition. Further, the ratio of blast furnace slag to the total content of limestone and blast furnace slag is preferably from 30 to 70 mass%.

In addition to the limestone and blast furnace slag, the hydraulic composition may also contain fly ash and/or siliceous mixture. In this case, the total content of limestone and blast furnace slag, fly ash and/or siliceous mixture should be not more than 14 mass% in the total composition. The total content of fly ash and silica mixture should preferably be not more than 5 mass%, and more preferably not more than 3 mass%. The content of fly ash is preferably 1 mass% or less, and especially preferably no fly ash is included.

The mixture of cement clinker, gypsum, limestone, blast furnace slag, and other materials should preferably be adjusted to a powder degree of 2800 to 4500 $cm^2$/g in terms of Blaine's specific surface area.

For the milling method to prepare the powder degree to an appropriate level, known techniques can be used without any restrictions. Each component can be milled individually and then mixed, or the mixture can be milled after mixing. Ball mills, vertical mills, etc. can be used as the milling machine.

The hydraulic composition according to the invention can be used as Portland cement, especially Portland cement conforming to JIS standards. The Portland cement includes ordinary Portland cement, early-strength Portland cement, and super early-strength Portland cement. In addition to Portland cement, it can be used as a component of various mixed cements and solidifiers such as soil solidifiers.

Embodiments

The present invention will be described in detail with reference to embodiments, but the invention is not limited to these embodiments.

Clinker was obtained from industrial raw materials including limestone, coal ash, and waste materials such as construction soil. The clinker had the composition shown in Table 1 where the mineral composition and indices were calculated according to the Bogue's formulae. The clinker raw materials were baked in an electric furnace at a relatively low temperature of 1350 degree Celsius for 90 minutes to obtain the cement clinker used in the present invention.

To this cement clinker, gypsum was added by an amount of $2 \pm 0.2$ mass% in reduction to $SO_3$ ($4.3 \pm 0.43$ mass% in reduction to dihydrate gypsum), and the predetermined mixed materials (limestone and blast furnace slag) were further added. The mixture was then ground to a specific Blaine's surface area of $3200 \pm 50$ $cm^2$/g. The mortar compressive strength of the resulting cement was measured. Table 2 shows the content of mixing materials and mortar compressive strength of the embodiments.

The method used for measuring were as follows.

(1) Measurement of the chemical composition of raw materials and cement clinker: Measured by X-ray fluorescence analysis method according to JISR5204.

(2) Mortar compressive strength: Measured by the method according to JISR5201.

Table 1

| | Moduls· Index | | | Mineral Composition by Bogue's Formulae | | | |
|---|---|---|---|---|---|---|---|
| | HM | SM | IM | $C_3S$ | $C_2S$ | $C_3A$ | $C_4AF$ |
| Clinker | 2.04 | 1.49 | 1.21 | 64 | 6 | 8.7 | 17.6 |

Table 2

| | Content (mass%) | | | Slag Content (%) | Compressive Mortar Strength (N/mm$^2$) | | |
|---|---|---|---|---|---|---|---|
| | limestone | slag | limestone+slag | | Day 3 | Day 7 | Day 28 |
| Comp. 1 | 0 | 0 | 0 | - | 30.3 | 42.4 | 56.4 |
| Ref. 1 | 5.0 | 0 | 5.0 | 0 | 29.7 | 44.8 | 59.0 |
| Ref. 2 | 2.5 | 2.5 | | 50 | 27.4 | 42.3 | 57.0 |
| Comp. 2 | 0 | 5.0 | | 100 | 27.2 | 38.4 | 54.8 |
| Comp. 3 | 10.0 | 0 | 10.0 | 0 | 30.8 | 43.6 | 55.0 |
| Emb. 1 | 5.0 | 5.0 | | 50 | 27.4 | 42.0 | 59.2 |
| Comp. 4 | 0 | 10.0 | | 100 | 24.5 | 35.6 | 50.1 |
| Emb. 2 | 6.0 | 6.0 | 12.0 | 50 | 27.2 | 41.9 | 57.6 |
| Comp. 5 | 7.5 | 7.5 | 15.0 | 50 | 27.1 | 41.0 | 56.8 |
| Comp. 6 | 10.0 | 10.0 | 20.0 | 50 | 27.0 | 40.6 | 55.2 |

The day 28 compressive strength of mortars will be described as the indicator of long-term strength development.

Among Comparative Example 1, Reference Example 1, and Reference Example 2, in which the total content of blast furnace slag and limestone is 5 mass% or lower, Reference Example 1 without blast furnace slag had the highest compressive strength at day 28. Comparative Example 2 with only blast furnace slag had the lowest. Reference Example 2 with 50 mass% blast furnace slag had a middle value. The day 28 compressive strength of Reference Example 2 containing a total of 5.0 mass% of limestone and blast furnace slag was better compared to Comparative Example 1 without any mixture but was not sufficient.

In Comparative Example 3, Embodiment 1, and Comparative Example 4, with the total of blast furnace slag and limestone of 10 mass% per total composition, more than 5.0 mass%, the day 28 compressive strength is highest in Embodiment 1 where the ratio of blast furnace slag to the total blast furnace slag and limestone was 50 mass%. The compressive strength was sufficiently higher than that of Comparative Example 1. In contrast, Comparative Examples 3 without blast furnace slag and Comparative Example 4 with only blast furnace slag had lower values. These indicate that if both blast furnace slag and limestone are used and if the total content of blast furnace slag and limestone exceeds 5 mass% of the total composition, very good long-term strength development is resultant.

In Comparative Examples 5 and 6, limestone and blast furnace slag were added more than 14 mass% in total. Compared to Embodiment 2 with a total of 12.0 mass%, the day 28 compressive strength of Comparative Examples 5 and 6 was lower; equal to or lower than that of Comparative Example 1.

A CaO source, an SiO$_2$, an Al$_2$O$_3$ source, and a Fe$_2$O$_3$ source were baked at a maximal temperature of 1500 degree Celsius in a rotary kiln to an ordinary Portland cement clinker. The hydraulic compositions of Comparative Examples 7-13 were prepared using the ordinary Portland cement clinker. The composition of the ordinary Portland cement clinker was 64 mass% C$_3$S, 16 mass% C$_2$S, 10 mass% C$_3$A, and 9 mass% C$_4$AF.

To 91 mass% of the cement clinker, a total of 5 mass% of limestone, fly ash, and blast furnace slag, and 4 mass% of dihydrate gypsum were added and ground to obtain hydraulic compositions (Comparative Examples 7 to 11). In addition, a total of 10 mass% of limestone, fly ash, and blast furnace slag and 4 mass% of dihydrate gypsum were added to 86 mass% of cement clinker, and the mixture was ground to hydraulic compositions (Comparative Examples 12, 13). Mortar compressive strength was measured at day 28 in the same manner as in Embodiments 1, 2, etc. The results are shown in Table 3.

Table 3.

Compressive Strength of Ordinary Portland Cement Clinker

| | Limestone | Fly Ash | Slag | Mortar Compressive Strength (N/mm$^2$) at day 28 (relative to Comparative Example 7) |
|---|---|---|---|---|
| Comparative example 7 | 5 | 0 | 0 | 100% |
| Comparative example 8 | 0 | 5 | 0 | 98% |
| Comparative example 9 | 0 | 0 | 5 | 94% |
| Comparative example 10 | 2.5 | 2.5 | 0 | 104% |
| Comparative example 11 | 0 | 2.5 | 2.5 | 98% |
| Comparative example 12 | 5 | 5 | 0 | 106% |
| Comparative example 13 | 5 | 5 | 0 | 99% |

\* Contents of additives are in mass% unit.

Regarding ordinary Portland cement clinker, there is no indication that the combination of limestone and blast furnace slag (Comparative Example 13) is effective for day 28 strength. Rather, the combination of limestone and fly ash (Comparison Examples 10 and 12) resulted in higher day 28 strength.

Claims

1.    A hydraulic composition comprising: a cement clinker having the total content of $C_3A$ and $C_4AF$ of 24 mass% or more, a $C_3S$ content of 63 mass% or more, and an iron modulus (I.M.) not less than 1.14 and not more than 1.27; calculated by the Bogue's formulae; gypsum; blast furnace slag; and limestone,
**characterized in that** the total content of blast furnace slag and limestone is more than 5 mass% and not more than 14 mass% in the hydraulic composition.

2.    The hydraulic composition according to claim 1, **characterized in that** blast furnace slag is not less than 30 mass% and not more than 70 mass% and limestone is not more than 70 mass% and not less than 30 mass%, to the total content of blast furnace slag and limestone.

3.    The hydraulic composition according to claim 2, **characterized in that** the total content of blast furnace slag and limestone is not less than 8 mass% and not more than 14 mass% in the hydraulic composition, and that the content of limestone is not less than 5 mass%.

4.    The hydraulic composition according to one of claims 1 to 3, **characterized in that** the content of fly ash is not more than 1 mass%.

5.    The hydraulic composition according to claim 4, **characterized in that** the hydraulic composition comprises: the cement clinker; gypsum; blast furnace slag; and limestone without fly ash.

6.    The hydraulic composition according to one of claims 1 to 5, **characterized in that** the cement clinker consists of: $C_3A$; $C_4AF$; $C_3S$; and $C_2S$ and

has a composition of: calculated by the Bogue's formulae,
the total content of $C_3A$ and $C_4AF$ not less than 24 mass% and not more than 32 mass%; the content of $C_4AF$ not less than 15 mass%;
the $C_3S$ content not less than 63 mass% and not more than 65 mass%; and
a $C_2S$ content is not less than 3 mass% and not more than 13 mass%.

7.    The hydraulic composition according to one of claims 1 to 6, **characterized in that** the content of gypsum is determined such that the content of $SO_3$ is from 1.5 to 5.0 mass% in the hydraulic composition.

8. A production method of a hydraulic composition comprising: producing a cement clinker by baking a mixture of a CaO source; an $SiO_2$ source; an $Al_2O_3$ source; and a $Fe_2O_3$ source at a temperature not less than 1300 degree Celsius and not more than 1400 degree Celsius such that the resultant cement clinker has the total content of $C_3A$ and $C_4AF$ of 24 mass% or more; a $C_3S$ content of 63 mass% or more; and an iron modulus (I.M.) not less than 1.14 and not more than 1.27, calculated by the Bogue's formulae, and
adding gypsum; blast furnace slag; and limestone to the cement clinker after cooling such that the total content of blast furnace slag and limestone is more than 5 mass% and not more than 14 mass% in the total composition.

9. The production method of the hydraulic composition according to claim 8, **characterized in that** gypsum; blast furnace slag; and limestone are added to the cement clinker without adding fly ash.

10. A production method of the hydraulic composition according to claim 8 or 9, **characterized in that** the cement clinker is produced such that the cement clinker consists of: $C_3A$; $C_4AF$; $C_3S$; and $C_2S$ and

has a composition of: calculated by the Bogue's formulae,
the total content of $C_3A$ and $C_4AF$ not less than 24 mass% and not more than 32 mass%; the content of $C_4AF$ not less than 15 mass%;
the $C_3S$ content not less than 63 mass% and not more than 65 mass%; and
a $C_2S$ content is not less than 3 mass% and not more than 13 mass%.

# EP 4 501 880 A1

<table>
<tr><td colspan="2"><b>INTERNATIONAL SEARCH REPORT</b></td><td>International application No.<br><br><b>PCT/JP2023/011452</b></td></tr>
</table>

**A. CLASSIFICATION OF SUBJECT MATTER**

***C04B 7/14***(2006.01)i; ***C04B 14/28***(2006.01)i; ***C04B 22/14***(2006.01)i; ***C04B 28/04***(2006.01)i; ***C04B 18/14***(2006.01)i
FI: C04B7/14; C04B22/14 B; C04B18/14 A; C04B14/28; C04B28/04

According to International Patent Classification (IPC) or to both national classification and IPC

**B. FIELDS SEARCHED**

Minimum documentation searched (classification system followed by classification symbols)

C04B2/00-C04B32/02; C04B14/28; C04B40/00-C04B40/06; C04B103/00-C04B111/94

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

JSTPlus/JMEDPlus/JST7580 (JDreamIII)

**C. DOCUMENTS CONSIDERED TO BE RELEVANT**

| Category* | Citation of document, with indication, where appropriate, of the relevant passages | Relevant to claim No. |
|---|---|---|
| X | JP 2017-105648 A (TOKUYAMA CORP.) 15 June 2017 (2017-06-15)<br>paragraphs [0017], [0041], tables 1, 3 | 1-10 |
| Y | JP 2014-97918 A (TOKUYAMA CORP.) 29 May 2014 (2014-05-29)<br>claims, paragraphs [0007]-[0008], [0031], [0034]-[0044] | 1-10 |
| Y | JISハンドブック8建築I材料, 財団法人日本規格協会, 31 January 2001, page 136, (JIS Handbook. Japanese Standards Assoc.), non-official translation (8 Construction, I Materials.) page 136 | 1-10 |
| Y | JP 2010-235381 A (UBE IND., LTD.) 21 October 2010 (2010-10-21)<br>paragraphs [0050]-[0051] | 1-10 |
| A | 門田浩史ら, 少量混合成分を10%まで増加させたセメントの圧縮強さに及ぼすベースセメントのC3Sの影響, 第74回, 2020, pages 186-187, non-official translation (KADOTA, Hiroshi et al. Effect of C3S in Base Cement on Compressive Strength of Cement with Minor Mixtures Increased to 10%. 74th.)<br>entire text | 1-10 |

☐ Further documents are listed in the continuation of Box C.  ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **02 May 2023** | **16 May 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/011452**

| Patent document cited in search report | | | Publication date (day/month/year) | Patent family member(s) | Publication date (day/month/year) |
|---|---|---|---|---|---|
| JP | 2017-105648 | A | 15 June 2017 | (Family: none) | |
| JP | 2014-97918 | A | 29 May 2014 | (Family: none) | |
| JP | 2010-235381 | A | 21 October 2010 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012224504 A

- JP 2014097918 A

**Non-patent literature cited in the description**

- **NAKAGUCHI et al.** Quality Evaluation of Cement with Increased Small content of Mixing Components. *Abstracts of the 72nd Cement Technology Conference*, 2018, 270-271

- **KADOTA et al.** Influence of C3S of base cement on compressive strength of cement with increased small content of mixed component up to 10 mass%. *Abstracts of the 74th Cement Technology Conference*, 2020, 186-187